# EUROPÄISCHE PATENTANMELDUNG

(11) **EP 1 093 969 A2**
(43) Veröffentlichungstag der Anmeldung: **25.04.2001**
(21) Anmeldenummer: 00120276.1
(22) Anmeldetag: 28.09.2000
(51) Int. Cl.: B60R 1/07

(54) **Stellantrieb, insbesondere zum Antrieb eines Kfz-Rückblickspiegels**

(30) Priorität: 19.10.1999 DE 19950189
(71) Anmelder: Bühler Motor GmbH, 90459 Nürnberg (DE)
(72) Erfinder: Guttenberger, Richard, 91171 Greding (DE); Seichter, Werner, 91166 Georgensgmünd (DE)

(57) **Zusammenfassung**

Die Erfindung betrifft einen Stellantrieb, insbesondere zum Antrieb eines Kfz-Rückblickspiegels, mit einem Gehäuse, zumindest einem darin angeordneten Elektromotor, dessen Ausgangswelle getrieblich mit einem ein Stellglied antreibendes Untersetzungsgetriebe gekuppelt ist und einem einstückig mit dem Gehäuse ausgebildeten Steckerschacht in den ein Anschlussstecker einsteckbar ist. Bekannte Stellantriebe dieser Art sind mit Steckanschlüssen ausgestattet und können nicht ohne Gehäuseänderung mit einer Zugentlastung für den direkten Anschluss von Versorgungs- und/oder Steuerleitungen an den zumindest einen Elektromotor versehen werden. Daher ist es Aufgabe der vorliegenden Erfindung bei einem gattungsgemäßen Stellantrieb eine Möglichkeit zu schaffen, mit einer Gehäuseform unterschiedliche Kontaktierungsarten zu ermöglichen und dennoch stets eine Zugentlastung für die Versorgungs- und/oder Steuerleitungen zu gewährleisten. Diese Aufgabe wird erfindungsgemäß durch ein zusätzliches, mit dem Gehäuse (2) nicht einstückiges, Zugentlastungsmittel (7) gelöst, das in den Steckerschacht (6) einsteckbar und mit dem Gehäuse (2) verriegelbar ist und mindestens zwei Versorgungs- und/oder Steuerleitungen (8) in einem von den Leitungsenden entfernten Bereich aufnimmt und Zugfest hält.

## Beschreibung

Die Erfindung betrifft einen Stellantrieb, insbesondere zum Antrieb eines Kfz-Rückblickspiegels, mit einem Gehäuse, zumindest einem darin angeordneten Elektromotor, dessen Ausgangswelle getrieblich mit einem ein Stellglied antreibendes Untersetzungsgetriebe gekuppelt ist und einem einstückig mit dem Gehäuse ausgebildeten Steckerschacht in den ein Anschlussstecker einsteckbar ist.

Es ist bereits ein Stellantrieb bekannt, mit einem Gehäuse, zwei Elektromotoren, deren Ausgangswellen getrieblich mit einem ein Spiegelglas antreibendes Untersetzungsgetriebe gekuppelt sind und einem einstückig mit dem Gehäuse ausgebildeten Steckerschacht, in den ein Anschlussstecker einsteckbar ist. Bei dem bekannten Stellantrieb sind die Motoren über Leitbleche mit dem Steckerschacht verbunden und bilden den Gegenstecker zu dem Anschlussstecker, der in den Steckerschacht einsteckbar und mit dem Gehäuse verrastbar ist. Der bekannte Stellantrieb weist den Nachteil auf, dass er nicht ohne Gehäuseänderung für andere Kontaktierungsarten, wie direktes Löten von Versorgungs- und/oder Steuerleitungen an die Elektromotoren oder anderen elektrischen oder elektronischen Bauteilen, einsetzbar ist, insbesondere wenn die Versorgungs- und/oder Steuerleitungen mit einer Zugentlastung versehen werden sollen.

Daher ist es Aufgabe der vorliegenden Erfindung bei einem gattungsgemäßen Stellantrieb eine Möglichkeit zu schaffen, mit einer Gehäuseform unterschiedliche Kontaktierungsarten zu ermöglichen und dennoch stets eine Zugentlastung für die Versorgungs- und/oder Steuerleitungen zu gewährleisten.

Diese Aufgabe wird erfindungsgemäß durch ein zusätzliches, mit dem Gehäuse nicht einstückiges, Zugentlastungsmittel, das in den Steckerschacht einsteckbar und mit dem Gehäuse verriegelbar ist und mindestens zwei Versorgungs und/oder Steuerleitungen in einem von den Leitungsenden entfernten Bereich aufnimmt und Zugfest hält, gelöst. Die Versorgungs und/oder Steuerleitungen können somit in dem zusätzlichen Zugentlastungsmittel aufgenommen und zugentlastet gehalten werden, während das Zugentlastungsmittel mit dem Gehäuse verrastet und somit Lagefest gehalten ist. Der Steckerschacht kann in einer anderen Applikation wieder als Gegenstecker verwendet werden, ohne dass am Gehäuse irgendwelche Veränderungen vorgenommen werden müssten.

Weitere vorteilhafte Ausgestaltungsmöglichkeiten des erfindungsgemäßen Stellantriebs werden in den Unteransprüchen genannt.

Das Zugentlastungsmittel kann aus einem einzigen Teil bestehen, wenn es aus zwei einstückig über zumindest ein Filmschamier oder eine Sollbruchstelle miteinander verbundene Aufnahmeteile besteht.

Bevorzugt werden zwei voneinander beabstandete Filmschamiere verwendet, die einen Durchgang begrenzen. Dieser Durchgang ist zur Aufnahme der Versorgungs- und/oder Steuerleitungen geeignet. Zweckmäßigerweise werden die beiden Aufnahmeteile so gestaltet, dass sie miteinander verrastbar sind. Dadurch können die Versorgungs- und/oder Steuerleitungen sicher gehalten werden. Die Verrastung besteht vorzugsweise aus Ausnehmungen und vorspringende Zapfen, die jeweils mit Rastmitteln ausgestattet sind, wobei die Zapfen in die Ausnehmungen geführt werden und dort einrasten.

Die Aufnahmeteile sind mit Leitungsaufnahmen und diese mit Klemmkanten versehen. Diese dienen dazu, die Leitungen bereits festzuhalten, bevor die beiden Aufnahmeteile miteinander verrastet sind.

Zusätzlich sichern Klemmkanten, die quer zum Leitungsverlauf gerichtet sind, die Versorgungs- und/oder Steuerleitungen gegen Zugkräfte und halten sie so in ihrer Lage.

Eine besonders gute zugentlastende Wirkung wird dadurch erzielt, dass der zumindest eine vorspringende Zapfen zwischen zwei Versorgungs und/oder Steuerleitungen eingreift und diese gegen zusätzliche Klemmkanten im Aufnahmeteil drückt.

Eine Montageerleichterung ist dadurch gegeben, dass Führungen, bestehend aus vorspringenden und rückspringenden Bereichen, zwischen den beiden Aufnahmeteilen vorgesehen sind, die als Füge- und Justagemittel dienen.

Da das Zugentlastungsmittel äußerlich so gestaltet ist, wie ein entsprechender Stecker, der in den Steckerschacht einsteckbar ist, kann das Gehäuse mit dem der Steckerschacht einstückig ist unverändert für unterschiedliche Kontaktierungsarten verwendet werden. Da das Zugentlastungsmittel mit Rasthaken des Gehäuses verrastbar ist, sind die Versorgungs- und/oder Steuerleitungen sicher gehalten.

Um das Zugentlastungsmittel spielfrei zu halten sind zusätzlich Anschlagmittel vorgesehen, welche die Einschubtiefe im Steckerschacht begrenzen.

Das Zugentlastungsmittel hat insbesondere dann Vorteile, wenn die Enden der Versorgungs- und/oder Steuerleitungen an den mindestens einen Elektromotor angelötet oder angeschweißt sind. Hierdurch sind die Löt- bzw. Schweißstellen keinen Zugkräften ausgesetzt, die die Kontaktsicherheit gefährden würden.

Nachfolgend wird anhand der Zeichnung ein Ausführungsbeispiel der Erfindung näher erläutert

Es zeigen:
Fig. 1 ein Zugentlastungsmittel in einem Vormontagezustand,
Fig. 2a das Zugentlastungsmittel in einem verrasteten Zustand
Fig. 2b das Zugentlastungsmittel im verrasteten Zustand im Schnitt,
Fig. 3 das Zugentlastungsmittel nach einem ersten Montageschritt,
Fig. 4 das Zugentlastungsmittel nach einem zweiten Montageschritt,
Fig. 5 das Zugentlastungsmittel im eingebauten Zustand und
Fig. 6 ein bekannter Stellantrieb mit Leitblechen.

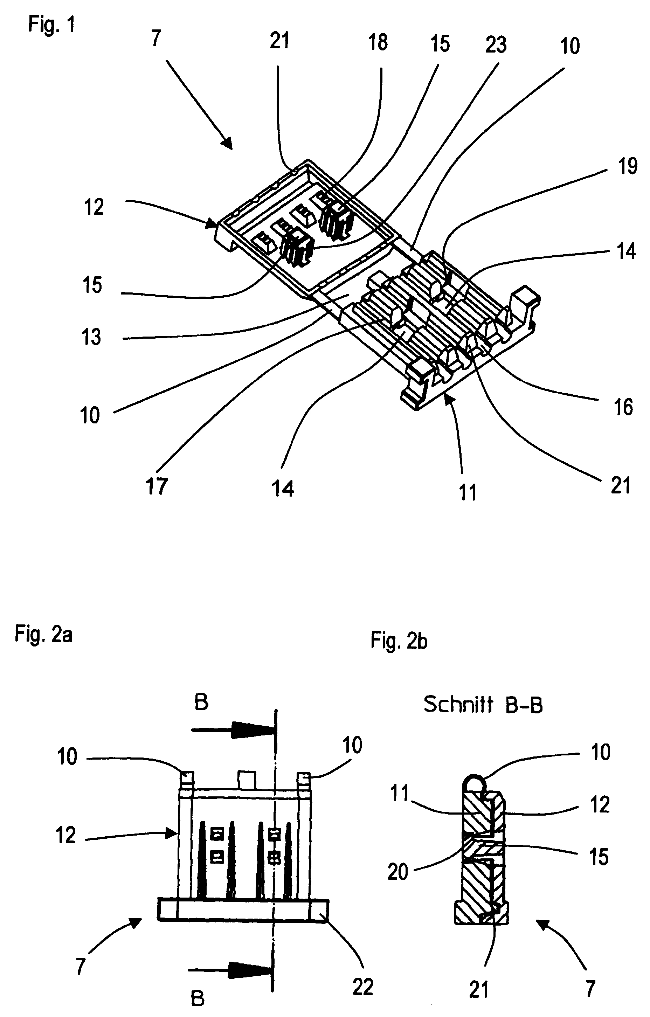

Fig. 1 zeigt ein Zugentlastungsmittgel 7 in einem Vormontagezustand, in dem zwei durch zwei Filmschamiere 10 miteinander verbundene Aufnahmeteile 11 und 12 in einem geöffneten Zustand gezeigt sind, mit einem Durchgang 13 zur Aufnahme von Versorgungs und/oder Steuerleitungen, die in Leitungsaufnahmen 16 mit Klemmkanten 17 einlegbar sind, Ausnehmungen 14 und mit Klemmkanten 23 versehene Zapfen 15, die ineinander greifen können und miteinander verrastbar sind, Klemmkanten 18, die quer zur Leitungslängsrichtung ausgerichtet sind, Klemmkanten 19, an welche die Versorgungs- und/oder Steuerleitungen im montierten Zustand andrückbar sind und Führungen 21, die als Fügehilfen dienen.

Fig. 2a zeigt das Zugentlastungsmittel 7, mit den Aufnahmeteilen 11 und 12 im verrastetetn Zustand, mit den Filmscharnieren 10 und mit Anschlagmitteln 22, welche die Einschubtiefe in einen Steckerschacht begrenzen. In Fig. 2b sind Rastmittel 20, die sich an den Ausnehmungen 14 und den Zapfen 15 befinden, die Filmschamiere 10 und die Führungen 21 im Schnitt dargestellt.

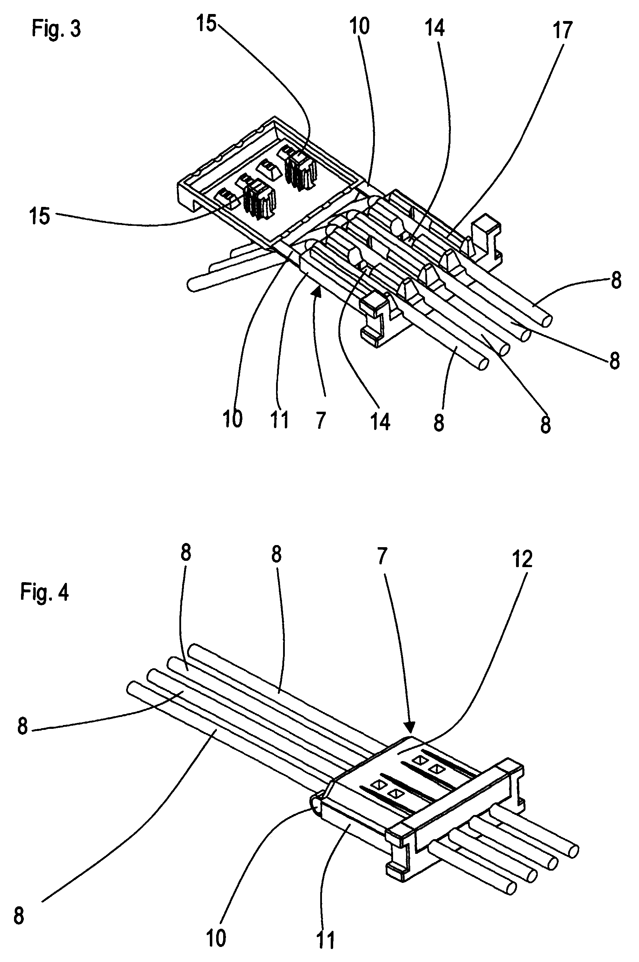

Das Zugentlastungsmittel 7 nach einem ersten Montageschritt zeigt Fig. 3. Dort sind Versorgungs- und oder Steuerleitungen 8 in das Aufnahmeteil 11 eingelegt und durch die Klemmkanten 17 bereits soweit gehalten, dass eine sichere Montage möglich ist. In Fig. 3 sind weiter die Ausnehmungen 14, die Zapfen 15 und die Filmschamiere 10 erkennbar.

Den Zustand des Zugentlastungsmittels 7 nach einem weiteren Montageschritt zeigt Fig. 4. Hier sind die beiden Aufnahmeteile 11 und 12 miteinander verrastet und halten somit die Versorgungs- und/oder Steuerleitungen sicher.

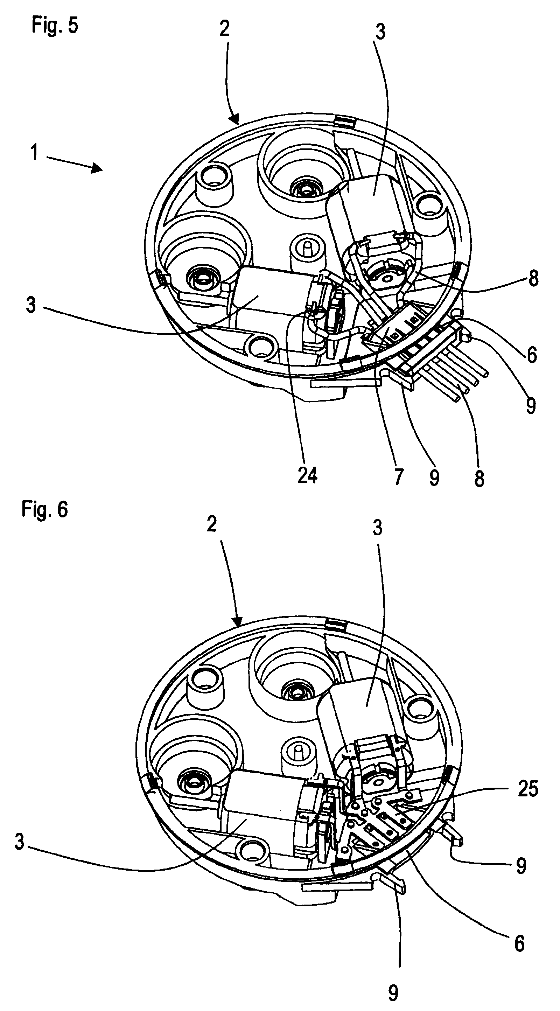

Fig. 5 zeigt einen Teil eines Stellantriebs 1 mit einem Gehäuseteil 2, das Elektromotoren 3 aufnimmt, deren Ausgangswellen mit je einem (nur angedeuteten) Untersetzungsgetriebe in Eingriff sind, den Steckerschacht 6, den Versorgungs- und/oder Steuerleitungen 8, die an Lötstellen 24 elektrisch mit den Elektromotoren 3 verbunden sind, das Zugentlastungsmittel 7, das die Schnapphaken 9 des Gehäuses 2 festhalten.

In Fig. 6 ist ein herkömmlicher Stellantrieb dargestellt, dessen Elektromotoren 3 über Leitbleche 25 kontaktiert werden, wobei die Leitbleche als Steckzungen dienen. Das Gehäuse, mit dem Steckerschacht 6 und den Schnapphaken 9 unterscheidet sich dabei nicht von dem Gehäuse aus Fig. 5, so dass für die beiden unterschiedlichen Kontaktierungsarten keine Änderungen am Gehäuse vorgenommen werden müssen.

### Bezugszeichenliste

- 1: Stellantrieb
- 2: Gehäuse
- 3: Elektromotor
- 4: Ausgangswelle
- 5: Untersetzungsgetriebe
- 6: Steckerschacht
- 7: Zugentlastungsmittel
- 8: Versorgungs-/Steuerleitungen
- 9: Rasthaken (Gehäuse)
- 10: Filmschamiere
- 11: Aufnahmeteil
- 12: Aufnahmeteil
- 13: Durchgang
- 14: Ausnehmung
- 15: Zapfen
- 16: Leitungsaufnahmen
- 17: Klemmkanten
- 18: Klemmkanten
- 19: Klemmkanten
- 20: Rastmittel (Zugentlastungsmittel)
- 21: Führungen
- 22: Anschlagmittel
- 23: Klemmkanten
- 24: Lötstellen
- 25: Leitbleche

## Patentansprüche

1. Stellantrieb (1), insbesondere zum Antrieb eines Kfz-Rückblickspiegels, mit einem Gehäuse (2), zumindest einem darin angeordneten Elektromotor (3), dessen Ausgangswelle (4) getrieblich mit einem ein Stellglied antreibendes Untersetzungsgetriebe (5) gekuppelt ist und einem einstückig mit dem Gehäuse ausgebildeten Steckerschacht (6) in den ein Anschlussstecker einsteckbar ist, **gekennzeichnet durch** ein zusätzliches, mit dem Gehäuse nicht einstückiges, Zugentlastungsmittel (7), das in den Steckerschacht (6) einsteckbar und mit dem Gehäuse verriegelbar ist und mindestens zwei Versorgungs und/oder Steuerleitungen (8) in einem von den Leitungsenden entfernten Bereich aufnimmt und Zugfest hält.

2. Stellantrieb nach Anspruch 1, **dadurch gekennzeichnet,** dass das Zugentlastungsmittel (7) aus zwei einstückig über zumindest ein Filmschamier (10) miteinander verbundene Aufnahmeteile (11, 12) besteht.

3. Stellantrieb, nach Anspruch 2**, dadurch gekennzeichnet,** dass zwischen den beiden Aufnahmeteilen (11, 12) ein von zwei Filmscharnieren (10) oder Sollbruchstellen begrenzter Durchgang (13) vorgesehen ist.

4. Stellantrieb nach Anspruch 3, **dadurch gekennzeichnet,** dass der Durchgang (13) zur Aufnahme der Versorgungs und/oder Steuerleitungen (8) dient.

5. Stellantrieb nach Anspruch 2, 3 oder 4, **dadurch gekennzeichnet,** dass die beiden Aufnahmeteile (11, 12) miteinander verrastbar sind.

6. Stellantrieb nach Anspruch 2, 3, 4 oder 5, **dadurch gekennzeichnet**, dass das eine Aufnahmeteil (11) zumindest eine Ausnehmung (14) aufweist.

7. Stellantrieb nach Anspruch 6, **dadurch gekennzeichnet,** dass das andere Aufnahmeteil (12) zumindest einen vorspringenden Zapfen (15) aufweist.

8. Stellantrieb nach Anspruch 5, 6 oder 7, **dadurch gekennzeichnet,** dass die beiden Aufnahmeteile (11, 12) im Bereich der Ausnehmungen (14) bzw. der Zapfen (15) Rastmittel (20) aufweisen, über die sie miteinander verrastbar sind.

9. Stellantrieb nach zumindest einem der vorhergehenden Ansprüche, **dadurch gekennzeichnet,** dass das Aufnahmeteil (11) mit Leitungsaufnahmen (16) versehen ist, die mit Klemmkanten (17) versehen sind, die bereits ein Halten der Versorgungs und/oder Steuerleitungen rechtwinklig zu deren Leitungsverlauf erlauben.

10. Stellantrieb nach zumindest einem der vorhergehenden Ansprüche, **dadurch gekennzeichnet,** dass das Aufnahmeteil (12) mit Klemmkanten (18) versehen ist, die quer zum Leitungsverlauf gerichtet sind und die Versorgungs und/oder Steuerleitungen bei Zugkräften in ihrer Lage halten.

11. Stellantrieb nach zumindest einem der vorhergehenden Ansprüche, **dadurch gekennzeichnet,** dass die vorspringenden Zapfen (15) Klemmkanten (23) die quer zum Leitungsverlauf angeordnet sind, aufweisen.

12. Stellantrieb nach zumindest einem der vorhergehenden Ansprüche, **dadurch gekennzeichnet,** dass der zumindest eine vorspringende Zapfen (15) zwischen zwei Versorgungs und/oder Steuerleitungen eingreift und diese gegen zusätzliche Klemmkanten (19) im Aufnahmeteil (11) drückt.

13. Stellantrieb nach zumindest einem der vorhergehenden Ansprüche, **dadurch gekennzeichnet,** dass Führungen (21), bestehend aus vorsringenden und rückspringenden Bereichen, zwischen den beiden Aufnahmeteilen (11, 12) vorgesehen sind, die als Füge- und Justagemittel dienen.

14. Stellantrieb nach Anspruch 9, 10 oder 11, **dadurch gekennzeichnet,** dass jeweils mehrere Klemmkanten (18, 19, 23) vorgesehen sind.

15. Stellantrieb nach zumindest einem der vorhergehenden Ansprüche, **dadurch gekennzeichnet,** dass das Zugentlastungsmittel (7) mit dem Gehäuse (2) verrastbar ist.

16. Stellantrieb nach zumindest einem der vorhergehenden Ansprüche, **dadurch gekennzeichnet,** dass Anschlagmittel (22) am Zugentlastungsmittel (7) vorgesehen sind, welche die Einschubtiefe im Steckerschacht begrenzen.

17. Stellantrieb nach zumindest einem der vorhergehenden Ansprüche, **dadurch gekennzeichnet,** dass die Enden der Versorgungs- und/oder Steuerleitungen an dem mindestens einen Elektromotor und/oder anderen elektrischen Bauteilen innerhalb des Gehäuses (2) angelötet oder angeschweißt sind.

18. Stellantrieb nach zumindest einem der vorhergehenden Ansprüche, **dadurch gekennzeichnet,** dass drei oder vier Versorgungs- und/oder Steuerleitungen vorgesehen sind.
